(19) Europäisches Patentamt / European Patent Office / Office européen des brevets

(11) **EP 2 064 418 B1**

(12) **EUROPEAN PATENT SPECIFICATION**

(45) Date of publication and mention
of the grant of the patent:
**12.10.2011 Bulletin 2011/41**

(51) Int Cl.:
***F01N 1/00*** *(2006.01)*  ***F02B 37/02*** *(2006.01)*

(21) Application number: **07803735.5**

(22) Date of filing: **04.09.2007**

(86) International application number:
**PCT/FI2007/050472**

(87) International publication number:
**WO 2008/034943 (27.03.2008 Gazette 2008/13)**

(54) **EXHAUST SYSTEM FOR A PISTON ENGINE AND METHOD OF DAMPING PRESSURE VIBRATION IN AN EXHAUST SYSTEM OF A PISTON ENGINE**

ABGASSYSTEM FÜR EINEN KOLBENMOTOR UND VERFAHREN ZUM DÄMPFEN VON DRUCKSCHWINGUNGEN IN EINEM ABGASSYSTEM EINES KOLBENMOTORS

SYSTÈME D'ÉCHAPPEMENT POUR MOTEUR À PISTON ET PROCÉDÉ D'AMORTISSEMENT DE VIBRATIONS DE PRESSION DANS UN SYSTÈME D'ÉCHAPPEMENT D'UN MOTEUR À PISTON

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.09.2006 FI 20065579**

(43) Date of publication of application:
**03.06.2009 Bulletin 2009/23**

(73) Proprietor: **Wärtsilä Finland Oy**
**65380 Vaasa (FI)**

(72) Inventors:
• **JÄRVI, Arto**
**65320 Vaasa (FI)**

• **ZACCHI, Giorgio**
**46035 Ostiglia (MN) (IT)**
• **ISAKSSON, Sten**
**65280 Vaasa (FI)**

(74) Representative: **Nissinen, Jyrki Antero**
**AWEK Industrial Patents Ltd Oy**
**Lautatarhankatu 6**
**00101 Helsinki (FI)**

(56) References cited:
AT-B- 132 227          DE-A1- 2 033 674
DE-U1- 20 018 689      GB-A- 484 771
US-A- 3 826 870        US-B1- 6 508 331

**Description**

The invention relates to an exhaust system for a piston engine.

The invention also relates to a method of damping pressure vibrations in an exhaust system of a piston engine.

Document DE 2 033 674 A discloses a device according to the preamble of claims 1.

In large turbocharged piston engines pressure vibration occurs in the exhaust conduit leading from the cylinder exhaust port to the turbine inlet. Pressure vibration is generated when exhaust gas is discharged from the cylinders of the engine. Exhaust gas flowing out from the cylinders increases the gas amount in the exhaust conduit which in turn causes pressure vibration in the exhaust conduit. The pressure vibration causes disturbances to the cylinder scavenging during valve overlap period i.e. during the period when both the inlet valve and the exhaust valve of the cylinder are open simultaneously. As a result of the pressure vibration, the thermal load of the exhaust valves, for example, increases due to back flow of the exhaust gas.

It is an object of the present invention to damp the pressure vibrations in the exhaust gas system of a turbocharged piston engine.

According to the invention this object is achieved by providing an exhaust conduit extending from a cylinder exhaust port to the turbine inlet with a resonator for damping pressure vibration in the exhaust conduit. In an embodiment of the invention the resonator comprises a body defining a cavity, one end of which is closed and the other end opens into the exhaust conduit.

In a method according to the invention the wave length of the pressure vibration occurring in the exhaust conduit is defined, and the pressure vibration is damped by generating in the exhaust conduit vibration having the same wave length but opposite phase.

More specifically, the exhaust system according to the invention is characterized by what is stated in characterizing part of claim 1.

Furthermore, the method according to the invention is characterized by what is stated in the characterizing part of claim 8.

The invention offers significant benefits.

The pressure vibration in the exhaust conduit can be damped away, whereby in practice a constant pressure prevails in the exhaust conduit. As a result, the pressure difference between the charge air receiver and the exhaust conduit is always positive and therefore the scavenging of the cylinders works in a desired way i.e. only fresh and cool air passes the exhaust valves during the valve overlap period. Furthermore, the exhaust system according to the invention can be made simple in structure and easy in maintenance, and it can also be readily installed in connection with the existing piston engines.

In the following the invention is described in more detail by way of example with reference to the accompanying schematic drawing which shows a turbocharged piston engine provided with an exhaust system according to the invention.

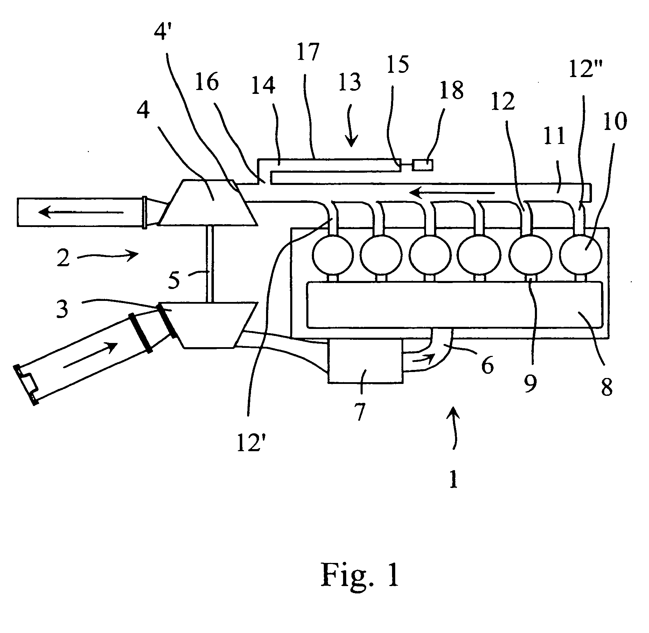

Figure 1 shows a turbocharged piston engine 1. Engine 1 is a large piston engine which is employed for example in power plants and ships. Engine 1 comprises a turbocharger 2 having a compressor 3 and a turbine 4 connected to each other by a shaft 5. Combustion air of the engine 1 is pressurized by the compressor 3. The outlet i.e. the high pressure side of the compressor 3 is connected to the inlet duct 6 through which pressurized combustion air is led into the cylinders 10.

The inlet duct 6 comprises a heat exchanger 7 by means of which air is cooled or heated. The inlet duct 6 also comprises a charge air receiver 8 from which air is led into the cylinders 10 through inlet ports 9. In the cylinders 10 fuel is combusted with air. Combustion gases are led from the cylinders 10 through exhaust ports 12, 12', 12" to an exhaust conduit 11.

The cylinders 10 of the engine 1 are arranged in a row and the exhaust conduit 11 extends parallel to the cylinder row. The first end of the exhaust conduit 11 is connected to the turbine inlet 4'. The second end of the exhaust conduit 11 is closed and located near the exhaust port 12" that is farthest from the turbine inlet 4'. From the exhaust conduit 11 exhaust gases are led into the turbine inlet 4' and through the turbine 4. Rotating motion of the turbine rotor is transmitted to the compressor rotor via shaft 5.

The exhaust system of the engine 1 comprises a resonator 13 by means of which pressure vibration in the exhaust conduit 11 is damped. Pressure vibration is generated when exhaust gas is discharged from the cylinders 10 of the engine 1. Exhaust gas flowing out from the cylinders 10 increases the gas amount in the exhaust conduit 11 which in turn causes pressure vibration in the exhaust conduit 11. The resonator 13 is arranged in connection with the exhaust conduit 11. The resonator 13 comprises a body 17 that defines an elongated cavity 14. One end 15 of the cavity 14 is closed and the other end 16 opens into the exhaust conduit 11. The connecting point of the open end 16 of the cavity 14 and the exhaust conduit 11 is as close as possible to the turbine inlet 4', for example in the region of the exhaust conduit 11 which is located between the turbine inlet 4' and the exhaust port 12' that is nearest to the turbine inlet 4'. Alternatively or in addition, the open end of the cavity 14 can be connected to the second end of the exhaust conduit 11. If the operation of some cylinder is disturbed, the open end 16 of the cavity 14 can be connected to the exhaust conduit 11 near the exhaust port of that cylinder. If necessary, two or more resonators 13 can be connected to the different points of the exhaust conduit 11, for example one resonator to the second end of the exhaust conduit 11 and second resonator to the exhaust conduit 11 near the turbine inlet 4'.

The cavity 14 of the resonator 13 can have any cross-sectional shape. In the embodiment shown in the drawing the cavity 14 has a circular cross-section. The cross-sectional flow area of the cavity 14 is 30 to 60 % of the cross-sectional flow area of the exhaust conduit 11. The length of the cavity 14 depends on the characteristics of the engine 1 and the exhaust gas pulses. The purpose of the resonator 13 is to generate in the exhaust conduit 11 pressure vibration that has the same wavelength but opposite phase compared to the pressure vibration being damped in the exhaust conduit 11, whereby the vibrations damp each other.

The pressure vibration caused by the exhaust gas flow from the cylinders 10 to the exhaust conduit 11 occurs at a certain, easily definable fundamental frequency or at some harmonic order thereof. The wavelength ($L_w$) of the pressure vibration being damped in the exhaust conduit 11 can be defined by an equation:

$$L_w = \frac{V}{I * f} = \frac{V}{I * N * (RPM / 60 / 2)}$$

in which

$f$ = fundamental frequency of the vibration being damped (1/s),

$I$ = harmonic order of frequency,

$V$ = speed of sound in exhaust gas (m/s),

$RPM$ = running speed of the engine, revolutions per minute, and

$N$ = cylinder number of the engine.

Alternatively, the frequency and wave length of the pressure vibration can be defined by measuring and/or simulation.

In order to generate vibration having an opposite phase to the vibration being damped, the length of the cavity 14 i.e. the distance between the open end 16 and the closed end 15 of the cavity 14 is 1/4 of the wave length of the pressure vibration being damped. In that case the pressure wave in the exhaust conduit 11 enters the cavity 14 from the open end 16 thereof, travels through the cavity 14 and reflects back from the closed end 15 of the cavity 14. When the reflected wave arrives at the open end 16 again, it has an opposite phase i.e. its phase difference is half a wavelength compared to the pressure vibration in the exhaust conduit 11. As a result of the phase difference the pressure waves damp each other.

The length ($L_c$) of the cavity 14 can be defined by the following equation:

$$L_C = L_W * \frac{1}{4} = \frac{V}{I * f} * \frac{1}{4} = \frac{V}{I * N * (RPM / 60 / 2)} * \frac{1}{4}$$

in which

$f$ = frequency of the vibration being damped (1/s),

$I$ = harmonic order of the frequency,

$V$ = speed of sound in exhaust gas (m/s),

$RPM$ = running speed of the engine, revolutions per minute, and

$N$ = cylinder number of the engine.

For example, if the speed of sound in the exhaust gas is 550 m/s, running speed of the engine is 1000 RPM, the cylinder number of the engine is 6, and the pressure vibration in the exhaust conduit 11 occurs at the third harmonic order of frequency, then according to the above equations the wavelength of the pressure vibration in the exhaust conduit 11 is about 3.67 m and the vibration can be damped by a resonator 13 having about 0.92 m long cavity 14 i.e. the distance between the open end 16 of the cavity and the closed end 15, from which the pressure wave reflects back, is about 0.92 m. Correspondingly, if the pressure vibration in the exhaust conduit 11 occurs at the first (fundamental) harmonic order of frequency, the wavelength of the pressure vibration in the exhaust conduit 11 is 11 m and the length of the cavity 14 is 2.75 m.

E.g. in large piston engines that are employed in power plants and ships the values of above parameters remain practically constant during the normal operation of the engine. If necessary, the resonator 13 can be designed so that the length of the cavity 14 can be adjusted. This makes it possible to change the vibration damping frequency in situations where the running speed of the engine is changed, for example. The closed end wall 15 of the cavity 14 can be made movable and it is moved relative to the body 17 by a drive mechanism 18 so as to change the operational length of the cavity 14.

**Claims**

1. An exhaust system for a turbocharged (2) piston engine (1), the exhaust system comprising

   - a cylinder exhaust port (12, 12', 12") for removing exhaust gas from the cylinder (10),
   - a turbine (4) through which the exhaust gas is arranged to flow,
   - an exhaust conduit (11) extending from the exhaust port (12) to the turbine inlet (4'), said exhaust conduit (11) being provided with at least one resonator (13) for damping pressure vibration in the exhaust conduit (11), **characterized in that** the resonator (13) comprises a body (17) defining a cavity (14), one end (15) of which is closed and the other end (16) of which opens into the exhaust conduit (11), the length of the cavity (14) being 1/4 of the wavelength of the pressure vibration to be damped.

2. An exhaust system according to claim 1, **characterized in that** the cross-sectional flow area of the cavity (14) is 30-60 % of the cross-sectional flow area of the exhaust conduit (11).

3. An exhaust system according to claim 1 or 2, **characterized in that** the cavity (14) is cylindrical.

4. An exhaust system according to the any of claims 1 to 3, **characterized in that** the length of the cavity (14) is adjustable.

5. An exhaust system according to claim 4, **characterized by** a drive mechanism (18) for moving the closed end (15) of the cavity (14) relative to the body (17).

6. An exhaust system according to any of claims 1 to 5, **characterized in that** the cavity (14) has a length ($L_c$) which is defined by an equation:

$$L_C = \frac{V}{I * f} * \frac{1}{4} \approx \frac{V}{I * N * (RPM/60/2)} * \frac{1}{4}$$

   in which
   $f$ = frequency of the vibration being damped (1/s),
   $I$ = harmonic order of frequency,
   $V$ = speed of sound in exhaust gas (m/s),
   $RPM$ = running speed of the engine (1), revolutions per minute $N$ = cylinder number of the engine.

7. Method of damping pressure vibrations in an exhaust gas system of a turbocharged (2) piston engine (1), in which method exhaust gas is led from cylinders (10) of the engine (1) through an exhaust port (12, 12', 12") and an exhaust conduit (11) into the turbine (4), the exhaust conduit (11) extending from the exhaust port (12, 12', 12") to the turbine inlet (4'), **characterized in that** the wave length of pressure vibration occurring in the exhaust conduit (11) is defined, and the pressure vibration is damped by forming in the exhaust conduit (11) pressure vibration having the same wave length but opposite phase.

8. A method according to claim 7, **characterised in that** the wave length ($L_w$) of the pressure vibration is defined by an equation:

$$L_w = \frac{V}{I * f} = \frac{V}{I * N * (RPM / 60 / 2)}$$

in which $f$ = frequency of the vibration being damped (1/s),
$I$ = harmonic order of frequency,
$V$ = speed of sound in exhaust gas (m/s),
$RPM$ = running speed of the engine (1), revolutions per minute $N$ = cylinder number of the engine (1).

9. Method according to claim 7 or 8, **characterized in that** the pressure vibration is generated by a resonator (13) comprising a body (17) defining a conduit (14), one end (15) of which being closed and other end (16) opens into the exhaust conduit (11).

**Patentansprüche**

1. Abgassystem für einen turbogeladenen (2) Kolbenmotor (1), wobei das Abgassystem Folgendes umfasst:

   einen Zylinderabgasanschluss (12, 12', 12 ") zum Entfernen von Abgas aus dem Zylinder (10),
   eine Turbine (4), durch welche das Abgas hindurchströmen soll,
   eine Abgasleitung (11), die vom Abgasabschluss (12) zum Turbineneinlass (4') verläuft, wobei die Abgasleitung (11) mit mindestens einem Resonator (13) ausgestattet ist, um die Druckschwingungen in der Abgasleitung (11) zu dämpfen,
   **dadurch gekennzeichnet, dass** der Resonator (13) einen Körper (17) umfasst, der einen Hohlraum (14) definiert, dessen eines Ende (15) geschlossen ist und dessen anderes Ende (16) sich in die Abgasleitung (11) öffnet, wobei die Länge des Hohlraumes (14) 1/4 der Wellenlänge der zu dämpfenden Druckschwingungen beträgt.

2. Abgassystem nach Anspruch 1, **dadurch gekennzeichnet, dass** die Querschnittsströmungsfläche des Hohlraumes (14) 30 bis 60 % der Querschnittsströmungsfläche der Abgasleitung (11) beträgt.

3. Abgassystem nach Anspruch 1 oder 2, **dadurch gekennzeichnet, dass** der Hohlraum (14) zylindrisch ist.

4. Abgassystem nach einem der Ansprüche 1 bis 3, **dadurch gekennzeichnet, dass** die Länge des Hohlraumes (14) einstellbar ist.

5. Abgassystem nach Anspruch 4, **gekennzeichnet durch** einen Antriebsmechanismus (18) zum Bewegen des geschlossenen Endes (15) des Hohlraumes (14) im Verhältnis zum Körper (17).

6. Abgassystem nach einem der Ansprüche 1 bis 5, **dadurch gekennzeichnet, dass** der Hohlraum (14) eine Länge ($L_C$) aufweist, die durch folgende Gleichung definiert ist:

$$L_C = \frac{V}{I * f} * \frac{1}{4} = \frac{V}{I * N * (RPM / 60 / 2)} * \frac{1}{4} \, ,$$

   wobei
   $f$ = Frequenz der Schwingung, die gedämpft wird (1/s),
   $I$ = Harmonische der Frequenz,
   $V$ = Schallgeschwindigkeit im Abgas (m/s),
   $RPM$ = Drehzahl des Motors (1), Umdrehungen pro Minute $N$ = Anzahl der Zylinder im Motor.

7. Verfahren zum Dämpfen von Druckschwingungen in einem Abgassystem eines turbogeladenen (2) Kolbenmotors (1), wobei in dem Verfahren Abgas vom Zylinder (10) des Motors (1) durch einen Zylinderabgasanschluss (12, 12', 12") und eine Abgasleitung (11) in die Turbine (4) geleitet wird, wobei die Abgasleitung (11) vom Abgasanschluss (12, 12', 12") zum Turbineneinlass (4') verläuft, **dadurch gekennzeichnet, dass** die Wellenlänge der in der Abgasleitung (11) auftretenden Druckschwingungen definiert wird und die Druckschwingung gedämpft wird, indem in der Abgasleitung (11) eine Druckschwingung mit der gleichen Wellenlänge, aber mit entgegengesetzter Phase gebildet wird.

8. Verfahren nach Anspruch 7, **dadurch gekennzeichnet, dass** die Wellenlänge ($L_W$) der Druckschwingung durch folgende Gleichung definiert wird:

$$L_C = \frac{V}{I*f} * \frac{1}{4} = \frac{V}{I*N*(RPM/60/2)} * \frac{1}{4} \,,$$

wobei
$f$ = Frequenz der Schwingung, die gedämpft wird (1/s),
$I$ = Harmonische der Frequenz,
$V$ = Schallgeschwindigkeit im Abgas (m/s),
$RPM$ = Drehzahl des Motors (1), Umdrehungen pro Minute
$N$ = Anzahl der Zylinder im Motor.

9. Verfahren nach Anspruch 7 oder 8, **dadurch gekennzeichnet, dass** die Druckschwingung durch einen Resonator (13) erzeugt wird, der einen Körper (17) umfasst, der eine Leitung (14) definiert, deren eines Ende (15) geschlossen ist und deren anderes Ende (16) sich in die Abgasleitung (11) öffnet.

**Revendications**

1. Système d'échappement pour moteur à piston (1) turbochargé (2), le système d'échappement comprenant

   - un port d'échappement de cylindre (12, 12', 12") pour retirer le gaz d'échappement du cylindre (10),
   - une turbine (4) à travers laquelle le gaz d'échappement est agencé pour s'écouler,
   - un conduit d'échappement (11) s'étendant depuis le port d'échappement (12) vers l'entrée de la turbine (4'), ledit conduit d'échappement (11) étant muni d'au moins un résonateur (13) pour amortir la vibration de pression dans le conduit d'échappement (11),
   **caractérisé en ce que** le résonateur (13) comprend un corps (17) définissant une cavité (14), dont une extrémité (15) est fermée et dont l'autre extrémité (16) ouvre dans le conduit d'échappement (11), la longueur de la cavité (14) faisant 1/4 de la longueur d'onde de la vibration de pression à amortir.

2. Système d'échappement selon la revendication 1, **caractérisé en ce que** la surface d'écoulement de section transversale de la cavité (14) fait 30-60% de la surface d'écoulement de section transversale du conduit d'échappement (11).

3. Système d'échappement selon la revendication 1 ou 2, **caractérisé en ce que** la cavité (14) est cylindrique.

4. Système d'échappement selon l'une des revendications 1 à 3, **caractérisé en ce que** la longueur de la cavité (14) est réglable.

5. Système d'échappement selon la revendication 4, **caractérisé par** un système d'entraînement (18) pour déplacer l'extrémité fermée (15) de la cavité (14) par rapport au corps (17).

6. Système d'échappement selon l'une des revendications 1 à 5, **caractérisé en ce que** la cavité (14) présente une longueur ($L_c$) qui est définie par une équation :

$$L_c = \frac{V}{I * f} * \frac{1}{4} = \frac{V}{I * N * (RPM/60/2)} * \frac{1}{4}$$

dans laquelle

$f$ = la fréquence de la vibration qui est amortie (1/s),

$I$ = l'ordre harmonique de fréquence,

$V$ = la vitesse du son dans le gaz d'échappement (m/s),

$RPM$ = la vitesse du moteur (1), le nombre de tours par minute

$N$ = le nombre de cylindres du moteur.

7. Procédé d'amortissement des vibrations dans un système de gaz d'échappement d'un moteur à piston (1) turbochargé (2), dans lequel procédé le gaz d'échappement est dirigé, depuis des cylindres (10) du moteur (1), à travers un port d'échappement (12, 12', 12") et un conduit d'échappement (11), dans la turbine (4), le conduit d'échappement (11) s'étendant depuis le port d'échappement (12, 12', 12") vers l'entrée de la turbine (4'), **caractérisé en ce que** la longueur d'onde de la vibration de pression se produisant dans le conduit d'échappement (11) est définie, et la vibration de pression est amortie en formant dans le conduit d'échappement (11) une vibration de pression ayant la même longueur d'onde mais une phase opposée.

8. Procédé selon la revendication 7, **caractérisé en ce que** la longueur d'onde ($L_w$) de la vibration de pression est définie par une équation :

$$L_w = \frac{V}{I * f} = \frac{V}{I * N * (RPM/60/2)}$$

dans laquelle

$f$ = la fréquence de la vibration qui est amortie (1/s),

$I$ = l'ordre harmonique de fréquence,

$V$ = la vitesse du son dans le gaz d'échappement (m/s),

$RPM$ = la vitesse du moteur (1), le nombre de tours par minute

$N$ = le nombre de cylindres du moteur.

9. Procédé selon la revendication 7 ou 8, **caractérisé en ce que** la vibration de pression est générée par un résonateur (13) comprenant un corps (17) définissant un conduit (14) dont une extrémité (15) est fermée et dont l'autre extrémité (16) ouvre dans le conduit d'échappement (11).

Fig. 1

EP 2 064 418 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2033674 A